# FASCICULE DE BREVET EUROPEEN

(11) **EP 1 234 272 B1**
(45) Date de publication et mention de la délivrance du brevet: **01.10.2003**
(21) Numéro de dépôt: 00985399.5
(22) Date de dépôt: 04.12.2000
(51) Int. Cl.: G06K 9/20

(54) **TECHNOLOGIE ADAPTATIVE D'ANALYSE AUTOMATIQUE DE DOCUMENT**
ANPASSUNGFÄHIGE TECHNOLOGIE ZUR AUTOMATISCHEN DOKUMENTENANALYSE
ADAPTIVE TECHNOLOGY FOR AUTOMATIC DOCUMENT ANALYSIS

(30) Priorité: 02.12.1999 FR 9915306
(43) Date de publication de la demande: 28.08.2002
(73) Titulaire: Itesoft S.A., 30470 Aimargues (FR); Charpentier, Didier, 30220 Aigues Mortes (FR)
(72) Inventeur: CHARPENTIER, Didier, F-30220 Aigues Mortes (FR)
(86) Numéro de dépôt international: FR0003379
(87) Numéro de publication internationale: WO01041050

(56) Documents cités:
- EP-A- 0 517 297
- EP-A- 0 519 713
- EP-A- 0 772 142
- WO-A-92/06447
- US-A- 3 643 069
- US-A- 4 481 665
- "FAST TECHNIQUE FOR FINDING THE AMOUNT FIELD" IBM TECHNICAL DISCLOSURE BULLETIN,US,IBM CORP. NEW YORK, vol. 37, no. 1, 1994, pages 167-168, XP000428730 ISSN: 0018-8689
- K. KERCHMAR: "Amount Line Finding Logic" IBM TECH. DISCLOSURE BULLETIN, vol. 15, no. 5, octobre 1972 (1972-10), pages 1531-1532, XP002145497

## Description

La présente invention concerne un procédé et un dispositif de lecture de documents.

Les approches habituelles pour la lecture automatique de documents, ou de formulaires, nécessitent un paramétrage qui définit les données à lire par les coordonnées selon deux axes, X et Y, des zones à traiter, c'est-à-dire des zones susceptibles de contenir des symboles à reconnaître. Aussi, à chaque variation de format de document, même légère, il est nécessaire d'effectuer un nouveau paramétrage. Ce paramétrage est d'autant plus complexe à réaliser que le document est, lui-même, complexe.

Lorsqu'un document dont le format est défini de manière électronique, par exemple, par transmission sur un réseau de télécommunication, par exemple de type Internet, est imprimé, les positions des zones à traiter varient en fonction du logiciel (traitement de texte, logiciel de dessins) utilisé, de l'imprimante mise en oeuvre et, plus généralement, de la configuration du système informatique de l'utilisateur. La lecture automatique de ce document est alors rendue difficile, voire impossible, par ces variations.

Le document WO 98/47098 (PCT/SE 98/00602) présente une méthode pour l'acquisition automatique de données dans lequel un formulaire inconnu est numérisé par un scanner et des lignes sont repérées sur ce formulaire pour l'identifier parmi tous les documents possibles. Cependant l'identification du document n'évite pas les inconvénients exposés ci-dessus.

La présente invention vise à remédier à ces inconvénients. A cet effet, la présente invention vise un dispositif et un procédé de lecture automatique d'un document qui sont definis dans les revendications annexées.

Selon un premier aspect, la présente invention vise un dispositif de lecture automatique de document comportant :
- un capteur d'image du document adapté à fournir une image dudit document et
- un moyen de sortie d'informations lues sur ledit document et d'informations de significations d'au moins une partie desdites informations lues, caractérisé en ce qu'il comporte, en outre :
- un moyen de détection d'au moins un guide de lecture et
- un moyen d'association d'au moins une information lue avec une information de signification mettant en oeuvre ledit guide de lecture.

Grâce à ces dispositions, la lecture est guidée et les informations lues sont associées à une information de signification grâce audit guidage. L'extraction de l'information utile du document est ainsi guidée selon la structure logique d'une classe de documents (documents dont le contenu est similaire mais localisé de manière différente) plutôt que par la structure physique du document.

Selon des caractéristiques particulières du dispositif tel que succinctement exposé ci-dessus :
- il comporte un moyen de conservation d'au moins une contrainte de positionnement d'au moins un champ dudit document, champ dans lequel une information est susceptible d'être lue,
- le moyen de détection est adapté à détecter le respect d'au moins une contrainte de positionnement par au moins une information lue,
- le moyen d'association est adapté à associer à chaque information lue qui respecte une dite contrainte, une information de signification représentative de ladite contrainte.

Grâce à ces dispositions, le dispositif est capable de lire des documents dans lesquels les champs d'informations sont spécifiés par contrainte et non par positionnement absolu. Par exemple, les positions respectives des champs, les positions respectives des libellés, des positions approximatives de champs, permettent de repérer les champs d'information.

Selon des caractéristiques particulières du dispositif tel que succinctement exposé ci-dessus :
- ce dispositif comporte un moyen de conservation d'au moins une caractéristique graphique d'au moins un champ dudit document, champ dans lequel une information est susceptible d'être lue,
- le moyen de détection est adapté à détecter au moins un champ du document qui présente une dite caractéristique graphique,
- le moyen d'association est adapté à associer à chaque information lue qui est dans un champ qui présente une dite caractéristique graphique, une information de signification représentative de la présente de ladite caractéristique.

Grâce à ces dispositions, des caractéristiques graphiques, telle que des lignes, des colonnes, des cadres, des cases, des hachures, des couleurs, des niveaux de gris ou des peignes permettent d'identifier les champs d'information à lire.

Selon des caractéristiques particulières du dispositif tel que succinctement exposé ci-dessus :
- il comporte un moyen de conservation d'au moins un libellé d'au moins un champ dudit document, champ dans lequel une information est susceptible d'être lue,
- le moyen de détection est adapté à lire au moins un dit libellé,
- le moyen d'association est adapté à associer à chaque information lue dans un champ qui présente ledit libellé, une information de signification représentative dudit libellé.

Grâce à ces dispositions des libellés écrits, tels que des numéros de formulaires, ou des titres de cases, permettent de spécifier la signification de l'informations à lire.

Selon des caractéristiques particulières du dispositif tel que succinctement exposé ci-dessus :
- il comporte un moyen de conservation d'au moins une contrainte de contenu d'information d'au moins un champ dudit document, champ dans lequel une information est susceptible d'être lue,
- le moyen de détection est adapté à lire le contenu d'au moins un champs dudit document,
- le moyen d'association est adapté à associer à chaque information lue dans un champ qui respecte ladite contrainte de contenu, une information de signification représentative dudit contenu.

Grâce à ces dispositions, des mots clés permettent d'identifier les informations lues, comme par exemple « nom », « prénom », « âge », « sécurité sociale », « hors taxes », « T.T.C. ».

Selon un deuxième aspect, la présente invention vise un procédé de lecture automatique de document comportant :
- une opération de capture d'image du document et
- une opération de sortie d'informations lues sur ledit document et d'informations de significations d'au moins une partie desdites informations lues, caractérisé en ce qu'il comporte, en outre :
- une opération de détection d'au moins un guide de lecture et
- une opération d'association d'au moins une information lue avec une information de signification mettant en oeuvre ledit guide de lecture.

Ce procédé présentant les même caractéristiques particulières et les mêmes avantages que le dispositif succinctement exposé ci-dessus, ceux-ci ne sont pas rappelés ici.

La présente invention vise aussi un scanner et un ordinateur adaptés à mettre en oeuvre le procédé visé par la présente invention ou à comporter le dispositif visé par la présente invention.

D'autres avantages, buts et caractéristiques de la présente invention ressortiront de la description qui va suivre faite dans un but explicatif et nullement limitatif en regard des dessins annexés dans lesquels :
- la figure 1 représente, sous forme d'un schéma fonctionnel, un premier mode de réalisation du dispositif visé par la présente invention,
- la figure 2 représente, de manière schématique, une succession d'opérations mises en oeuvre selon un aspect du procédé visé par la présente invention.
- la figure 3 représente, sous forme d'un organigramme simplifié, un premier mode de réalisation du procédé visé par la présente invention,
- la figure 4 représente, sous forme d'un organigramme simplifié, un deuxième mode de réalisation du procédé visé par la présente invention,
- la figure 5 représente, sous forme d'un organigramme simplifié, un troisième mode de réalisation du procédé visé par la présente invention,
- la figure 6 représente, sous forme d'un organigramme simplifié, un quatrième mode de réalisation du procédé visé par la présente invention,
- la figure 7 représente un document mettant en oeuvre les quatre modes de réalisation illustrés aux figures 3 à 6, et
- la figure 8 représente, sous forme d'un organigramme simplifié, un cinquième mode de réalisation du procédé visé par la présente invention.

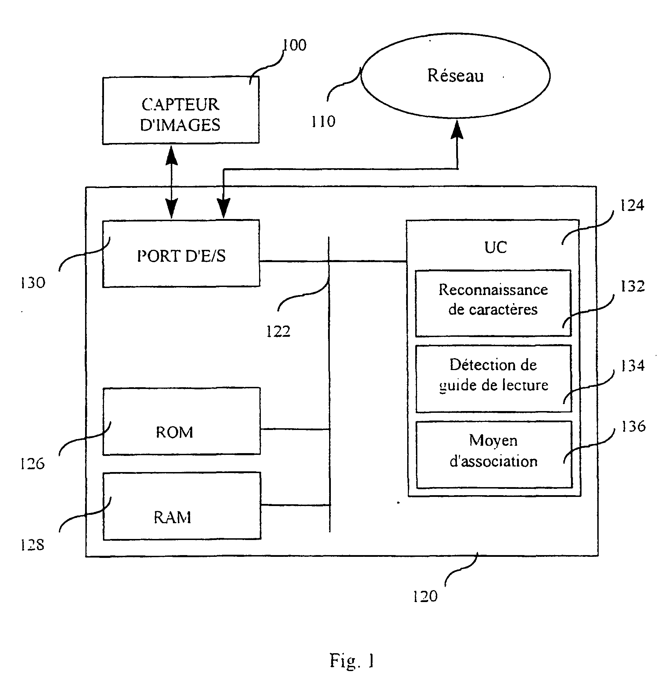

En figure 1, sont représentés un capteur d'images 100, un dispositif de lecture automatique de documents 120 et une connexion d'un réseau informatique 110.

Le capteur d'images 100 est adapté à fournir un signal électronique représentant les formes et couleurs portés sur un document, par exemple un formulaire remplis manuellement par un utilisateur. Par exemple, le capteur d'images 100 est un scanner de type connu. La connexion au réseau informatique 110 est de type connu. Elle transmet des informations de contenu du document une fois que le dispositif de lecture automatique de document a traité le signal issu du capteur 100.

Le dispositif de lecture automatique de documents 120 comporte, reliés entre eux par un bus de données et de contrôle 122, une unité centrale 124, une mémoire non volatile 126, une mémoire vive 128 et un port d'entrée / sortie 130 lui-même relié d'une part au capteur 100 et d'autre part à la ligne de réseau 110. Le dispositif de lecture 120 peut, par exemple, être réalisé en programmant un ordinateur d'utilisation générale. Le dispositif de lecture peut aussi être réalisé sur un circuit imprimé comportant un processeur ou un contrôleur, un circuit spécifique, une matrice de portes ou dans un circuit intégré. Tous ces modes de réalisation sont bien connus de l'homme du métier des circuits électroniques et ils ne sont donc pas plus décrits ici.

L'unité centrale 124 comporte un circuit de reconnaissance de caractères 132, un circuit de détection d'au moins un guide de lecture 134 et un moyen d'association 136 d'au moins une information lue par le circuit de reconnaissance de caractères avec une information de signification de cette information lue. Le moyen d'association met en oeuvre au moins un guide de lecture pour associer une information de signification à une information lue.

Ainsi, le dispositif de lecture 120 transmet, sur la ligne de réseau informatique 110, d'une part de l'information qui a été lue sur le document, par exemple «Géraldine», «Pacaut» et, d'autre part, de l'information de signification qui indique que le premier mot correspond à un prénom et le deuxième à un nom. On observe cependant que l'information de signification peut être implicite, par exemple, l'ordre dans lequel chaque information lue sur un document est transmise sur le réseau étant prédéfini par un protocole de communication, ou de manière explicite, un identifiant prédéfini étant associé à chaque information, ou encore de manière mixte un identifiant étant associé à au moins une information.

L'usage fait des informations transmises sur la ligne du réseau informatique 110 ne relève pas de la présente invention. On observe, cependant, que l'information lue peut être archivée, en tout ou partie, dans une base de données, traitée, affichée, traduite, imprimée, triée, complétée ou détruite ou, pour chaque information, une combinaison de ces opérations.

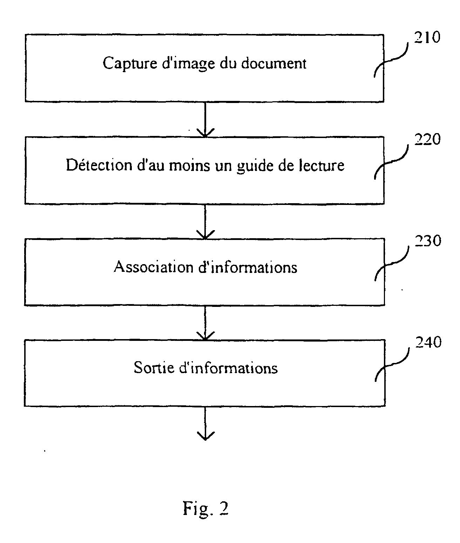

D'une manière générale, le dispositif de lecture automatique de documents 120 est adapté à mettre en oeuvre chacun des modes de réalisation et aspects du procédé visé par la présente invention, tels qu'ils sont exposés en regard des figures 2 à 8.

La figure 2 représente, de manière schématique, une succession d'opérations mises en oeuvre selon un aspect du procédé visé par la présente invention.

En figure 2, on observe que la lecture automatique de document comporte :
- une opération de capture d'image du document 210,
- une opération de détection d'au moins un guide de lecture 220,
- une opération d'association d'au moins une information lue avec une information de signification mettant en oeuvre ledit guide de lecture 230, et
- une opération de sortie d'informations lues sur ledit document et d'informations de significations d'au moins une partie desdites informations lues 240.

L'opération de capture d'image du document 210 consiste à capter une image du document et à former une information représentative de cette image. L'opération de détection d'au moins un guide de lecture 220 consiste à détecter un guide de lecture sur le document dont une image est captée au cours de l'opération 210. La détection est effectuée par traitement de l'information d'image du document. On observe que ce guide de lecture est un invariant du document qui résiste à certaines variations de constitution du document, de remplissage du document et de capture d'image du document. En outre, ce guide est extrait du traitement de l'image et dépend donc de son contenu. Ainsi, le guide de lecture n'est pas une information de position en coordonnées cartésiennes posée à priori avant la lecture du document.

L'opération d'association d'au moins une information lue avec une information de signification mettant en oeuvre ledit guide de lecture 230 consiste à lire une information en traitant l'information d'image et à associer une information de signification à l'information lue, en fonction du guide de lecture.

L'opération de sortie d'informations lues sur ledit document et d'informations de significations d'au moins une partie desdites informations lues 240 consiste à transmettre les données lues et les données de signification (au moins de manière implicite pour l'information de signification), par exemple en vue de leur traitement, leur stockage, leur affichage, leur complément, leur impression, leur tri, leur transmission ou leur destruction.

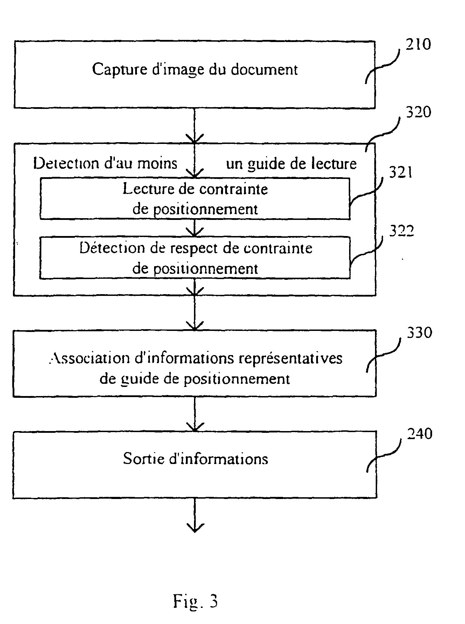

Dans le mode de réalisation du procédé visé par la présente invention représenté, sous forme d'un organigramme simplifié, en figure 3, on retrouve les opérations de capture d'image du document 210, de détection d'au moins un guide de lecture 320, d'association d'au moins une information lue avec une information de signification mettant en oeuvre ledit guide de lecture 330, et de sortie d'informations lues sur ledit document et d'informations de significations d'au moins une partie desdites informations lues 240.

L'opération de détection d'un guide de lecture 320 comporte une opération de lecture d'au moins une contrainte de positionnement d'au moins un champ dudit document 321, champ dans lequel une information est susceptible d'être lue, et une opération de détection d'un éventuel respect d'au moins une contrainte de positionnement par au moins une information lue 322. Chaque contrainte de positionnement évoquée ici est une contrainte de positionnement relatif entre les informations lues sur le document. Une telle contrainte s'exprime, par exemple, par « le nom est au-dessus de l'adresse », « le montant H.T. précède le montant de la TVA », « le numéro représentant le mois et le numéro représentant le jour précédent le numéro représentant l'année » ...

Au cours de l'opération d'association 330, à chaque information lue qui respecte une dite contrainte est associée une information de signification représentative de ladite contrainte. Ainsi l'information lue « 99 » dans un bloc d'information « 25 / 02 / 99 » est associé à une information de signification « année » car elle est précédée par un numéro, « 25 » que l'on peut associer au jour et un numéro « 02 » que l'on peut associer au mois.

Ainsi des documents dans lesquels les champs d'informations sont spécifiés par contraintes positionnement et non par positionnement absolu sont lus. Par exemple, les positions respectives des champs, les positions respectives des libellés, des positions approximatives de champs, permettent de les repérer.

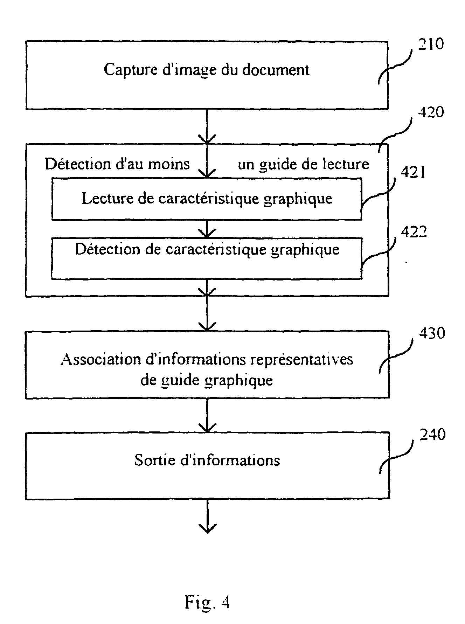

Dans le mode de réalisation du procédé visé par la présente invention représenté, sous forme d'un organigramme simplifié, en figure 4, on retrouve les opérations de capture d'image du document 210, de détection d'au moins un guide de lecture 420, d'association d'au moins une information lue avec une information de signification mettant en oeuvre ledit guide de lecture 430, et de sortie d'informations lues sur ledit document et d'informations de significations d'au moins une partie desdites informations lues 240.

L'opération de détection d'un guide de lecture 420 comporte une opération de lecture d'au moins une caractéristique graphique d'au moins un champ dudit document 421, champ dans lequel une information est susceptible d'être lue, et une opération de détection d'un éventuel champ qui présente une dite caractéristique graphique 422. Chaque caractéristique graphique évoquée ici est une caractéristique de forme, de couleur, d'élément, de ligne, ... Par exemple, une ligne horizontale épaisse domine le total dans une facture, une adresse est placée dans un cadre rectangulaire, les réponses à des questionnaires à choix multiple sont dans des cases carrées, l'âge du scripteur est sur un fond jaune ou hachuré, la date comporte deux barres obliques incliné de haut à droite en bas à gauche ...

Au cours de l'opération d'association 430, à chaque information lue qui est dans un champ qui présente une dite caractéristique graphique est associée une information de signification représentative de la présence de ladite caractéristique. Selon les exemples exposés ci-dessus, une information placée sur un fond jaune ou sur un fond hachuré est associée à la signification « âge », l'information lue dans un cadre rectangulaire est associée à la signification « adresse », ...

Ainsi, la constitution d'un document à compléter est aisée. Des caractéristiques graphiques, telle que des lignes, des colonnes, des cadres, des cases, des hachures, des couleurs, des niveaux de gris ou des peignes permettent d'identifier les champs d'information à lire.

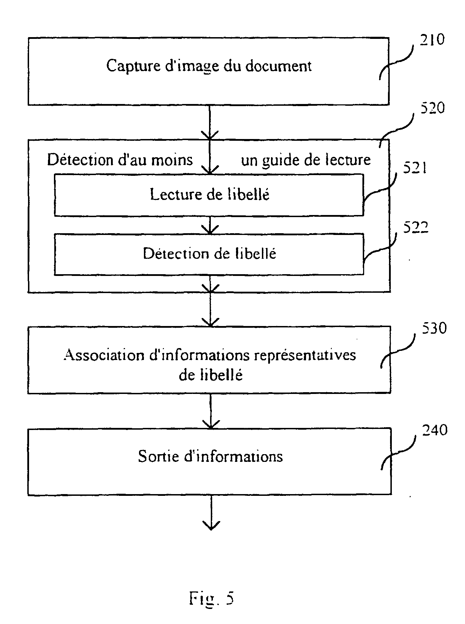

Dans le mode de réalisation du procédé visé par la présente invention représenté, sous forme d'un organigramme simplifié, en figure 5, on retrouve les opérations de capture d'image du document 210, de détection d'au moins un guide de lecture 520, d'association d'au moins une information lue avec une information de signification mettant en oeuvre ledit guide de lecture 530, et de sortie d'informations lues sur ledit document et d'informations de significations d'au moins une partie desdites informations lues 240

L'opération de détection d'un guide de lecture 520 comporte une opération de lecture d'au moins un libellé d'au moins un champ dudit document 521, champ dans lequel une information est susceptible d'être lue, et une opération de lecture d'un éventuel libellé 522.

Chaque libellé évoqué ici est une séquence d'au moins un symbole qui identifie un champ. Par exemple, le libellé peut être limité :
- à un numéro écrit avec une très petite dimension (par exemple inférieure) à la moitié de la hauteur des symboles de l'information lue,
- à une succession de points dont le nombre représente le libellé,
- à un nombre de hachures,
- à un nombre d'emplacement de symboles d'information (par exemple un prénom sur une ligne où quinze symboles sont prétracés, un nom sur une ligne où vingt symboles sont prétracés, une adresse sur une ligne possédant plus de vingt symboles, un âge sur une ligne possédant trois emplacement de symboles, un numéro de sécurité sociale sur une succession d'exactement treize symboles ...),
- à un ou plusieurs mots (par exemple le mot « nom » associé au champ où le scripteur est invité à écrire son nom, ...).

Au cours de l'opération d'association 530, à chaque information lue dans un champ qui présente ledit libellé est associée une information de signification représentative dudit libellé.

Ainsi, la constitution d'un document à compléter est aisée. Des libellés de signification sont attachés aux champs qui doivent recevoir les informations à lire.

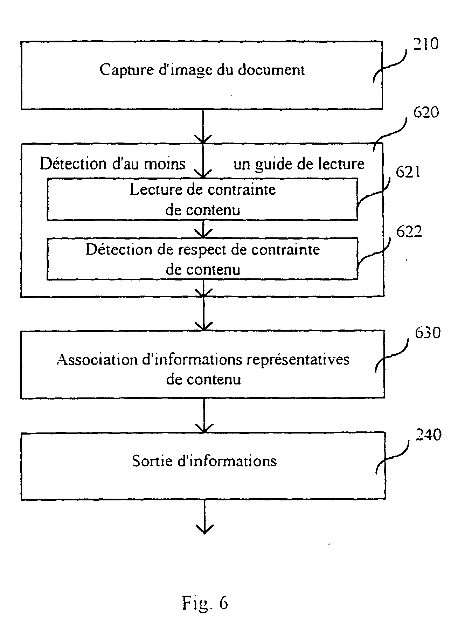

Dans le mode de réalisation du procédé visé par la présente invention représenté, sous forme d'un organigramme simplifié, en figure 6, on retrouve les opérations de capture d'image du document 210, de détection d'au moins un guide de lecture 620, d'association d'au moins une information lue avec une information de signification mettant en oeuvre ledit guide de lecture 630, et de sortie d'informations lues sur ledit document et d'informations de significations d'au moins une partie desdites informations lues 240.

L'opération de détection d'un guide de lecture 620 comporte une opération de lecture d'au moins une contrainte de contenu d'information d'au moins un champ dudit document 621, champ dans lequel une information est susceptible d'être lue, et une opération de lecture de contenu d'au moins un champs dudit document 622.

Par contenu, on entend ici la sémantique de l'information. Par exemple un nombre a moins de trois chiffres est signe d'un contenu d'âge. Une succession de plus de trois mots combinée avec des chiffres et comportant un nombre à 5 chiffres est une adresse. Une séquence de treize chiffres est un numéro de sécurité sociale.

Au cours de l'opération d'association 630, à chaque information lue dans un champ qui respecte ladite contrainte de contenu est associée une information de signification représentative dudit contenu.

Grâce à ces dispositions, des formulaires peu structurés peuvent être mis en oeuvre.

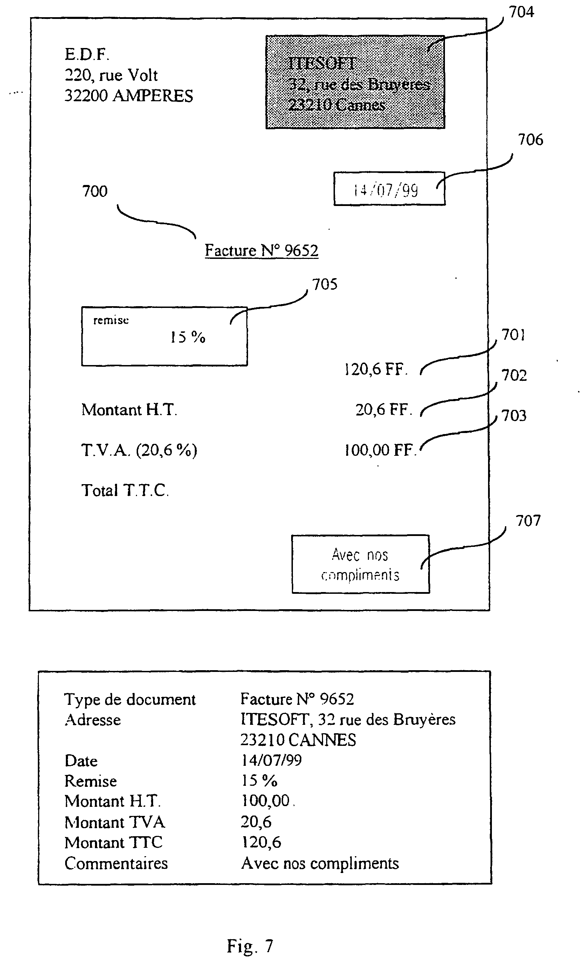

La figure 7 représente un document mettant en oeuvre les quatre modes de réalisation illustrés aux figures 3 à 6. La partie supérieure représente l'image d'un document et la partie inférieure un fichier d'informations et de significations qui est complété sur la base de ladite image.

Le champ 700 présente comme contrainte de positionnement d'être centré dans le document, par rapports aux bords latéraux (droite et gauche) du document. La mise en oeuvre du mode de réalisation de l'invention illustré en figure 3 permet d'identifier l'information qui est associée à la signification « type de document ».

Les champs 701 à 703 présentent des contraintes de positionnement conformément au mode de réalisation illustré en figure 3. Ainsi, bien que les montants ne soient, pas du tout alignés avec leurs libellés (« montant H.T. », « montant TVA » et « montant T.T.C. »), leur succession aide à déterminer l'information de signification qui doit leur être assignée.

Les 701 à 703 présentent, en outre, une contrainte de contenu, puisque le plus petit des trois montants est le montant de la TVA et le plus grand le montant T.T.C.. Grâce à cette contrainte, bien que les montants n'aient pas été placés dans l'ordre demandé, le mode de réalisation du procédé visé par la présente invention illustré en figure 6 assigne à chacun d'entre eux sa signification normale.

Le champ 704 sur fond grisé correspond à une adresse. Conformément au mode de réalisation illustré en figure 4, la signification de l'information lue dans ce champ est déterminée par ce fond qui constitue un guidage graphique.

Le champ 705 comporte un libellé écrit « remise » qui, conformément au mode de réalisation illustré en figure 5 permet d'identifier la signification de l'information qui est lue dans ce champ.

Enfin, le champ 706 comporte deux barres obliques orientées de haut à droite en bas à gauche et l'information qui y est lue est associée à une date conformément au mode de réalisation illustré en figure 4.

Enfin, le champ 707 présente un contenu « avec nos compliments » qui correspond à une formule de politesse et est ainsi associé à une commentaire conformément à la mise en oeuvre du mode de réalisation illustré en figure 6.

On observe que la signification de certaines informations lues peut être déterminées selon plusieurs modes de réalisation du procédé objet de la présente invention. Par exemple, une date qui comporte trois nombres de deux chiffres séparées par des barres obliques peut être identifiée par une caractéristique graphique, les deux barres, ou par son contenu, trois fois deux chiffres.

Dans la suite de la description, on utilise les définitions suivantes :
« famille » concerne un ensemble de documents qui répondent à des critères de ressemblance approximative. Pour chaque famille, des règles plus générales, moins précises et plus approximatives que les simples coordonnées planaires des zones à lire, permettent de décrire le document et les zones à traiter.

### Par exemple:

Les déclarations d'échanges de biens utilisés par les douanes françaises, comportent, pour moitié, des documents dits « cerfa » et, pour moitié, des documents imprimés par les entreprises déclarantes. Ces déclarations constituent une famille parce que les informations de l'entête figurent à peu près au même endroit et les colonnes sont dans le même ordre, sur presque toutes les déclarations.

Les bons de commande utilisées par les entreprises de vente par correspondance changent souvent pour des raisons commerciales. Cependant, la nature de l'information utile contenue dans ces formulaires est toujours la même. De plus, cette information est organisée en blocs d'information. Ces blocs peuvent être des blocs d'adresse, d'énumération des articles commandés; de mode de paiment, ...

Les factures fournisseur reçues par une entreprise sont toutes différentes car chaque fournisseur imprime sa facture à sa manière particulière. Cependant, les zones à traiter concernent, au moins, le montant hors taxe, le montant de Taxe sur la Valeur Ajoutée et montant toutes taxes comprises, la date et le numéro de la pièce.

Un « formulaire » est un ensemble de une ou plusieurs pages. Chaque page se décompose en un ou plusieurs blocs.

Chaque « bloc » comporte des éléments graphiques (lignes horizontales, lignes verticales, cadres, logos, images, ...), textuels (libellés et labels d'identification, textes divers, ...) ainsi que les champs et zones à lire.

Chaque « élément » est défini par des caractéristiques dont le degré de tolérance doit représenter toutes les variations possibles dans la famille.

Certains documents ou familles de documents comportent des objets spécifiques qui permettent de localiser les données à extraire d'une façon générale et globale.

Par exemple, un libellé textuel est souvent suivi de la valeur du champ, sur une ligne, dans un cadre, dans une case ou une série de cases, ou sans guide graphique. Par exemple, dans un cadre, le libellé, s'il y en a un, est souvent dans le coin supérieur gauche. Les champs de réponse à des questionnaires sont souvent des objets graphiques de forme rectangulaire. Les libellés des colonnes sont souvent à leur début, en haut.

Ainsi, l'analyse de l'image extrait tous les éléments qui permettent d'identifier le document (objets graphiques, traits, cadres, libellés, logos, ...). L'identification de la page permet d'associer à l'image à traiter le modèle du document qui décrit la structure de la page.

Les éléments définis dans la structure de la page sont comparés à ceux trouvés ou recherchés dans l'image. Cette recherche s'effectue dans les limites de leurs caractéristiques (tolérances sur les positions, variations relatives, chaînes de caractères approchées, ...) pour aboutir à une hypothèse de segmentation.

Cette hypothèse de segmentation permet de repérer avec précision les champs à traiter et d'extraire les images de ces champs pour les étapes suivantes.

L'affectation de la définition logique du champ (nom, type, contrôle de cohérence, ...) et du champ physique trouvé dans la page, s'effectue à partir de la position physique absolue de la position relative à un autre champ et/ou de l'association avec un libellé (entreprise, ...).

L'utilisation d'objets spécifiques facilite le paramétrage des documents car l'analyse automatique de la page localise tous les objets répondant aux caractéristiques recherchées, vérifie les contraintes exprimées et extrait les champs à lire sans segmentation complexe de la page.

On observe que le procédé adaptatif développé pour traiter les formats variables apporte une robustesse et une tolérance exceptionnelles à toutes les formes de décalage et d'anomalies d'impression des documents.

La technologie adaptative utilise, comme notre oeil, les caractéristiques graphiques « naturelles » ou intuitives, le contenu, les libellés et titres des champs (ou zones), ou les positions relatives pour identifier l'information contenue dans chaque champs.

L'analyse et la segmentation de la page s'appuient sur des règles logiques (exemple : total de colonnes dans le bas de la page, définition du type de colonne selon son ordre, libellé associé au champ, ...) indépendamment de la position physique précise représentée par des coordonnées planaires.

L'utilisation de la technologie adaptative permet de définir un seul modèle de document pour une famille de documents, et donc toutes les variations physiques d'une même description logique. Ce modèle associe les champs et leurs identifiants à des caractéristiques peu contraignantes pour les concepteurs de documents mais qui définissent la famille de documents considérée.

Le procédé et le dispositif de la présente invention traitent donc des documents similaires mais différents sur le plan physique ainsi que les formulaires normalisés produits par ordinateur.

L'utilisation de la lecture adaptative conforme à la présente invention permet de définir un seul modèle de document pour toute une famille de variations physiques d'une même description logique. La technologie d'analyse automatique de page permet d'extraire « d'un coup d'oeil » tous les champs à traiter sans même avoir appris le type de page utilisé.

Parmi les classes de document auxquelles s'applique la présente invention, on peut citer :
- les bons de commande (vente par correspondance, ...),
- les déclarations d'échanges de biens (douanes),
- les documents Intrastat et Extrastat,
- les liasses fiscales
- les factures,
- les questionnaires,
- les déclarations uniques de cotisations sociales,
- les effets de commerce,
- les chèques bancaires,
- les décomptes de sécurité sociale,
- les courriers et bulletins légaux, ...

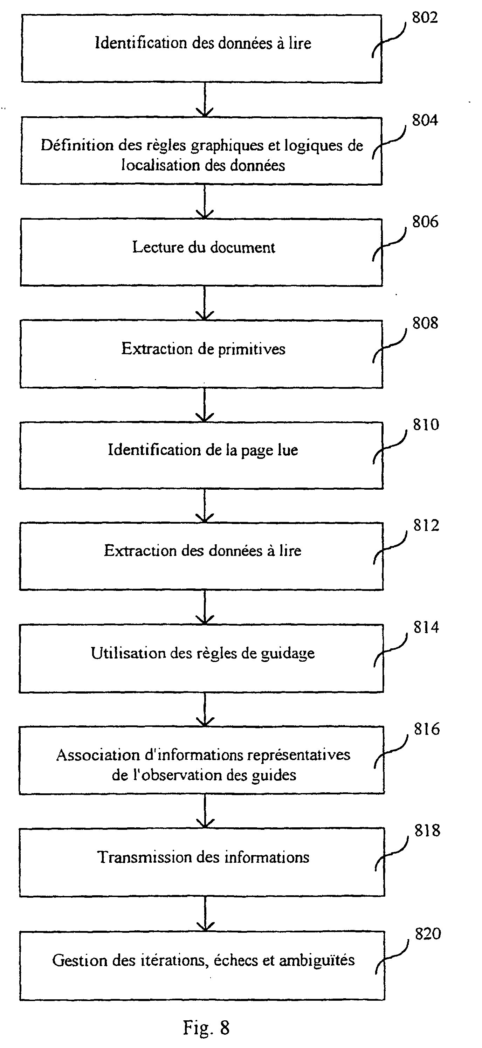

En figures 8, à la suite d'une opération 802 d'identification de la classe de document du document analysé, une opération 804 de définition des règles graphiques et logiques de localisation des données est réalisée. Ensuite, une lecture du document 806 est effectuée. La lecture du document consiste à numériser le document et à accéder aux propriétés de l'image électronique du document et aux objects représentant l'image, par exemple objects graphiques tels qu'icones ou morceaux d'images, ou des éléments au sens des langages SGML et XML qui définissent certains documents au moment de leur génération.

Ensuite, les primitives sont extraites des données lues au cours d'une opération 808. Les primitives sont des éléments primaires du document qui répondent à des propriétés élémentaires. Par exemple, si le document est représenté par une image électronique, une primitive peut être le pixel (ou élément d'image) ou une composante connexe, c'est-à-dire une collection de pixels adjacents répondant aux même propriétés structurelles telles qu'une même couleur, par exemple. Au cours d'une opération 810 la page lue est identifiée en mettant en oeuvre les primitives extraites puis, au cours d'une opération 812, les données à lire sont extraites de l'image du document, par exemple par reconnaissance optique de caractères. Les règles de guidage sont utilisées sur les données lues, y compris, le cas échéant, les positions relatives, les guides graphiques, le libellé ou le contenu des zones de lecture, au cours de l'opération 814.

Au cours d'une opération 816, les informations lues sur le document sont associées à des informations de signification, ces dernières étant en relation avec les guides de lecture utilisés, par le biais d'une table de correspondance logicielle, par exemple. Enfin, au cours d'une opération 818, les informations lues et les informations de significations associées sont transmises à un système de traitement, de stockage, d'affichage, ... , par exemple, comme décrit en regard des figures 1 et 2.

Une opération de gestion des itérations, des échecs, des ambiguïtés 820 permet au procédé de s'améliorer par apprentissage automatique.

## Revendications

1. Dispositif (120) de lecture automatique d'un document pourvu d'un capteur d'image (100) qui capte (210) une image du document, le dispositif comportant:
- un moyen (124, 132) de lecture (210) dans l'image captée dudit document d'une information représentative de l'image;
- un moyen (134) de détection (220, 320, 420, 520, 620) d'au moins un guide de lecture dudit document en fonction de ladite information représentative,
i) chaque guide de lecture étant associé à des caractéristiques visuelles et/ou au contenu sémantique d'au moins un champ (700-707) dudit document,
ii) chaque guide de lecture déterminant une structure logique dudit document, ladite structure logique étant indépendante de la localisation des champs dudit document;
- un moyen (124, 126, 128) de segmentation de l'image dudit document en champs, en fonction dudit guide de lecture et de ladite structure logique;
- un moyen (124, 126, 128) d'association des champs dudit document à des identifiants de signification en dépendance avec ledit guide de lecture et ladite structure logique;
- un moyen (132) d'extraction de données desdits champs dudit document;
- un moyen (136) d'association (230, 330, 430, 530, 630) des données extraites aux identifiants de signification associés aux champs; et
- un moyen (110, 130) de transmission (240, 340, 440) des données extraites et des identifiants de signification associés aux dites données.

2. Dispositif de lecture selon la revendication 1, dans lequel chaque guide de lecture détermine la famille à laquelle appartient ledit document, parmi une pluralité de familles de documents, chaque famille de documents ayant une structure logique commune à tous les documents de ladite famille.

3. Dispositif de lecture selon l'une quelconque des revendications 1 ou 2, **caractérisé en ce que**:
- il comporte un moyen de conservation (126, 128) d'au moins une contrainte de positionnement d'au moins un champ dudit document, champ dans lequel une information est susceptible d'être lue,
- le moyen de détection d'au moins un guide de lecture est adapté à détecter le respect d'au moins une contrainte de positionnement par au moins un dit champ, et
- le moyen d'association des champs est adapté à associer aux données lues dans un champ qui respecte une dite contrainte, un identifiant représentatif de ladite contrainte.

4. Dispositif de lecture selon l'une quelconque des revendications 1 à 3, **caractérisé en ce que**:
- il comporte un moyen de conservation (126, 128) d'au moins une caractéristique graphique d'au moins un champ dudit document, champ dans lequel une information est susceptible d'être lue,
- le moyen de détection d'au moins un guide de lecture est adapté à détecter au moins un champ dudit document qui présente une dite caractéristique graphique, et
- le moyen d'association des champs est adapté à associer à chaque champ qui présente une dite caractéristique graphique, un identifiant représentatif de ladite caractéristique graphique.

5. Dispositif de lecture selon l'une quelconque des revendications 1 à 4, **caractérisé en ce que**:
- il comporte un moyen de conservation (126, 128) d'au moins un libellé d'au moins un champ dudit document, champ dans lequel une information est susceptible d'être lue,
- le moyen de détection d'au moins un guide de lecture est adapté à lire au moins un dit libellé, et
- le moyen d'association des champs est adapté à associer à chaque champ qui présente un dit libellé, un identifiant représentatif dudit libellé.

6. Dispositif de lecture selon l'une quelconque des revendications 1 à 5, **caractérisé en ce que**:
- il comporte un moyen de conservation (126, 128) d'au moins une contrainte de contenu d'information d'au molns un champ dudit document, champ dans lequel une information est susceptible d'être lue,
- le moyen de détection d'au.moins un guide de lecture est adapté à lire le contenu d'au moins un champ dudit document, et
- le moyen d'association des champs est adapté à associer à chaque champ qui respecte ladite contrainte de contenu, un identifiant représentatif dudit contenu.

7. Dispositif de lecture selon l'une quelconque des revendications 1 à 6, **caractérisé en ce que** :
- il comporte un moyen de conservation (126, 128) d'au moins une contrainte de relation entre les contenus respectifs d'information d'au moins une pluralité de champs dudit document, champs dans lesquels une Information est susceptible d'être lue,
- le moyen de détection d'au moins un guide de lecture est adapté à lire le contenu d'au moins une pluralité de champs dudit document, et
- le moyen d'association des champs est adapté à associer à chaque pluralité de champs qui respecte ladite contrainte de relation entre les contenus respectifs d'information, une pluralité d'identifiants représentatifs de ladite relation.

8. Procédé de lecture automatique d'un document comportant une étape de capture d'une image du document (210), comportant, en outre :
- une étape de lecture (806) dans l'image captée dudit document d'une information représentative de l'image ;
- une étape de détection (220, 320, 420, 520, 620, 808) d'au moins un guide de lecture dudit document en fonction de ladite information représentative,
i) chaque guide de lecture étant associé à des caractéristiques visuelles et/ou au contenu sémantique d'au moins un champ (700-707) dudit document,
ii) chaque guide de lecture déterminant une structure logique dudit document, ladite structure logique étant indépendante de la localisation des champs dudit document;
- une étape de segmentation de l'image dudit document en champs, en fonction dudit guide de lecture et de ladite structure logique ;
- une étape d'association des champs dudit document à des identifiants de signification en dépendance avec ledit guide de lecture et ladite structure logique ;
- une étape (812) d'extraction de données desdits champs dudit document ;
- une étape (816) d'association des données extraites aux identifiants de signification associés aux champs ; et
- une étape (818) de transmission des données extraites et des identifiants de signification associés aux dites données.

9. Procédé de lecture selon la revendication 8, dans lequel chaque guide de lecture détermine la famille à laquelle appartient ledit document, parmi une pluralité de familles de documents, chaque famille de documents ayant une structure logique commune à tous les documents de ladite famille.

10. Procédé de lecture selon l'une quelconque des revendications 8 ou 9, **caractérisé en ce que**:
- Il comporte une étape de conservation d'au moins une contrainte de positionnement d'au moins un champ dudit document, champ dans lequel une information est susceptible d'être lue,
- au cours de détection d'au moins un guide de lecture, on détecte le respect d'au moins une contrainte de positionnement par au moins un dit champ, et
- au cours de l'étape d'association des champs, on associe aux données lues dans un champ qui respecte une dite contrainte, un identifiant représentatif de ladite contrainte.

11. Procédé de lecture selon l'une quelconque des revendications 8 à 10, **caractérisé en ce que** :
- il comporte une étape de conservation d'au moins une caractéristique graphique d'au moins un champ dudit document, champ dans lequel une information est susceptible d'être lue,
- au cours de l'étape de détection d'au moins un guide de lecture, on détecte au moins un champ dudit document qui présente une dite caractéristique graphique, et
- au cours de l'étape d'association des champs, on associe à chaque champ qui présente une dite caractéristique graphique, un identifiant représentatif de ladite caractéristique graphique.

12. Procédé de lecture selon l'une quelconque des revendications 8 à 11, **caractérisé en ce que**:
- il comporte une étape de conservation d'au moins un libellé d'au moins un champ dudit document, champ dans lequel une information est susceptible d'être lue,
- au cours de l'étape de détection d'au moins un guide de lecture, on lit au moins un dit libellé, et
- au cours de l'étape d'association des champs, on associe à chaque champ qui présente un dit libellé, un identifiant représentatif dudit libellé.

13. Procédé de lecture selon l'une quelconque des revendications 8 à 12, **caractérisé en ce que** :
- il comporte une étape de conservation d'au moins une contrainte de contenu d'information d'au moins un champ dudit document, champ dans lequel une information est susceptible d'être lue,
- au cours de l'étape de détection d'au moins un guide de lecture, on lit le contenu d'au moins un champ dudit document, et
- au cours de l'étape d'association des champs, on associe à chaque champ qui respecte ladite contrainte de contenu, un identifiant représentatif dudit contenu.

14. Procédé de lecture selon l'une quelconque des revendications 8 à 13, **caractérisé en ce que**:
- il comporte une étape de conservation d'au moins une contrainte de relation entre les contenus respectifs d'information d'au moins une pluralité de champs dudit document, champs dans lesquels une information est susceptible d'être lue,
- au cours de l'étape de détection d'au moins un guide de lecture, on lit le contenu d'au moins une piuralité de champs dudit document, et
- au cours de l'étape d'association des champs, on associe à chaque pluralité de champs qui respecte ladite contrainte de relation entre les contenus respectifs d'information, une pluralité d'identifiants représentatifs de ladite relation.

## Patentansprüche

1. Automatisches Dokumentenerkennungssystem (120) mit einem Bildsensor (100) zur Erfassung (210) eines Bildes des Dokumentes,
• bestehend aus:
- einem Erkennungsmodul (124, 132) zum Erkennen (210) einer repräsentativen Bildinformation in dem erfassten Bild des genannten Dokumentes;
- einem Suchmodul (134) zum Suchen (220, 320, 420, 520, 620) mindestens eines Hinweisobjektes des genannten Dokumentes in Abhängigkeit von der genannten repräsentativen Bildinformation, wobei jedes Hinweisobjekt
i) visuellen Merkmalen und/oder dem semantischen Inhalt mindestens eines Feldes (700-707) des genannten Dokumentes zugeordnet ist und
ii) eine logische Struktur des genannten Dokumentes bestimmt, die unabhängig ist von der Position des Feldes innerhalb des genannten Dokumentes;
- einem Segmentierungsmodul (124, 126, 128) zum Segmentieren des Bildes des genannten Dokumentes in Felder in Abhängigkeit von dem genannten Hinweisobjekt und der genannten logischen Struktur;
- einem Feldzuordnungsmodul (124, 126, 128) zum Zuordnen der Felder des genannten Dokumentes zu Bedeutungsidentifikatoren in Abhängigkeit von dem genannten Hinweisobjekt und der genannten logischen Struktur;
- einem Extraktionsmodul (132) zum Extrahieren von Daten aus den genannten Feldern des genannten Dokumentes;
- einem Datenzuordnungsmodul (136) zum Zuordnen (230, 330, 430, 530, 630) der extrahierten Daten zu den Bedeutungsidentifikatoren, denen die Felder zugeordnet wurden, und
- einem Übertragungsmodul (110, 130) zum Übertragen (240, 340, 440) der extrahierten Daten und der Bedeutungsidentifikatoren, denen die genannten Daten zugeordnet wurden.

2. Dokumentenerkennungssystem nach Anspruch 1,
• **dadurch gekennzeichnet,**
- **dass** jedes Hinweisobjekt innerhalb einer Anzahl von Dokumentenklassen die Dokumentenklasse bestimmt, der das genannte Dokument angehört, da jede Dokumentenklasse eine logische Struktur hat, die allen Dokumenten der genannten Dokumentenklasse gemein ist.

3. Dokumentenerkennungssystem nach einem der Ansprüche 1 oder 2,
• **dadurch gekennzeichnet,**
- **dass** es ein Erhaltungsmodul (126, 128) zum Erhalten mindestens einer definierten Position mindestens eines Feldes des genannten Dokumentes enthält, und zwar eines Feldes, in dem eine zu erfassende Information steht,
- **dass** das Suchmodul zum Suchen mindestens eines Hinweisobjektes geeignet ist zu erkennen, ob mindestens eine definierte Position durch mindestens ein solches Feld eingenommen wird, und
- **dass** das Feldzuordnungsmodul geeignet ist, den Daten in einem Feld, das eine solche definierte Position einnimmt, einen für die genannte definierte Position repräsentativen Identifikator zuzuordnen.

4. Dokumentenerkennungssystem nach einem der Ansprüche 1 bis 3,
• **dadurch gekennzeichnet,**
- **dass** es ein Erhaltungsmodul (126, 128) zum Erhalten mindestens eines graphischen Merkmals mindestens eines Feldes des genannten Dokumentes enthält, und zwar eines Feldes, in dem eine zu erfassende Information steht,
- **dass** das Suchmodul zum Suchen mindestens eines Hinweisobjektes geeignet ist, mindestens ein Feld des genannten Dokumentes zu erkennen, das ein solches graphisches Merkmal aufweist, und
- **dass** das Feldzuordnungsmodul geeignet ist, jedem Feld, das ein solches graphisches Merkmal aufweist, einen für das genannte graphische Merkmal repräsentativen Identifikator zuzuordnen.

5. Dokumentenerkennungssystem nach einem der Ansprüche 1 bis 4,
• **dadurch gekennzeichnet,**
- **dass** es ein Erhaltungsmodul (126, 128) zum Erhalten mindestens einer Bezeichnung mindestens eines Feldes des genannten Dokumentes enthält, und zwar eines Feldes, in dem eine zu erfassende Information steht,
- **dass** das Suchmodul zum Suchen mindestens eines Hinweisobjektes geeignet ist, mindestens eine solche Bezeichnung zu erkennen, und
- **dass** das Feldzuordnungsmodul geeignet ist, jedem Feld, das eine solche Bezeichnung aufweist, einen für die genannte Bezeichnung repräsentativen Identifikator zuzuordnen.

6. Dokumentenerkennungssystem nach einem der Ansprüche 1 bis 5,
• **dadurch gekennzeichnet,**
- **dass** es ein Erhaltungsmodul (126, 128) zum Erhalten mindestens eines definierten Informationsinhalts mindestens eines Feldes des genannten Dokumentes enthält, und zwar eines Feldes, in dem eine zu erfassende Information steht,
- **dass** das Suchmodul zum Suchen mindestens eines Hinweisobjektes geeignet ist, den Inhalt mindestens eines Feldes des genannten Dokumentes zu erkennen, und
- **dass** das Feldzuordnungsmodul geeignet ist, jedem Feld, das den genannten definierten Informationsinhalt aufweist, einen für den genannten Inhalt repräsentativen Identifikator zuzuordnen.

7. Dokumentenerkennungssystem nach einem der Ansprüche 1 bis 6,
• **dadurch gekennzeichnet,**
- **dass** es ein Erhaltungsmodul (126, 128) zum Erhalten mindestens einer definierten Beziehung zwischen den jeweiligen Informationsinhalten mindestens einer Anzahl von Feldern des genannten Dokumentes enthält, und zwar eines Feldes, in dem eine zu erfassende Information steht,
- **dass** das Suchmodul zum Suchen mindestens eines Hinweisobjektes geeignet ist, den Inhalt mindestens einer Anzahl von Feldem des genannten Dokumentes zu erkennen, und
- **dass** das Feldzuordnungsmodul geeignet ist, jeder Anzahl von Feldern, die die genannte definierte Beziehung zwischen den jeweiligen Informationsinhalten erfüllt, eine für die genannte Beziehung repräsentative Anzahl von Identifikatoren zuzuordnen.

8. Automatisches Dokumentenerkennungsverfahren, das eine Erfassungsphase enthält, in der ein Bild des Dokumentes erfasst wird (210),
• **dadurch gekennzeichnet, dass** es außerdem die folgenden Phasen umfasst:
- eine Erkennungsphase (806), in der eine repräsentative Bildinformation in dem erfassten Bild des genannten Dokumentes gelesen wird;
- eine Suchphase (220, 320, 420, 520, 620, 808), in der mindestens ein Hinweisobjekt des genannten Dokumentes in Abhängigkeit von der genannten repräsentativen Bildinformation gesucht wird, wobei jedes Hinweisobjekt
i) visuellen Merkmalen und/oder dem semantischen Inhalt mindestens eines Feldes (700-707) des genannten Dokumentes zugeordnet ist und
ii) eine logische Struktur des genannten Dokumentes bestimmt, die unabhängig ist von der Position des Feldes innerhalb des genannten Dokumentes;
- eine Segmentierungsphase, in der das Bild des genannten Dokumentes in Felder segmentiert wird in Abhängigkeit von dem genannten Hinweisobjekt und der genannten logischen Struktur;
- eine Feldzuordnungsphase, in der die Felder des genannten Dokumentes Bedeutungsidentifikatoren zugeordnet werden in Abhängigkeit von dem genannten Hinweisobjekt und der genannten logischen Struktur;
- eine Extraktionsphase (812), in der Daten aus den genannten Feldem des genannten Dokumentes extrahiert werden;
- eine Datenzuordnungsphase (816), in der die extrahierten Daten den Bedeutungsidentifikatoren zugeordnet werden, denen vorher die Felder zugeordnet wurden, und
- eine Übertragungsphase (818), in der die extrahierten Daten und die Bedeutungsidentifikatoren, denen die genannten Daten zugeordnet wurden, weiterübertragen werden.

9. Dokumentenerkennungsverfahren nach Anspruch 8,
• **dadurch gekennzeichnet,**
- **dass** jedes Hinweisobjekt innerhalb einer Anzahl von Dokumentenklassen die Dokumentenklasse bestimmt, der das genannte Dokument angehört, da jede Dokumentenklasse eine logische Struktur hat, die allen Dokumenten der genannten Dokumentenklasse gemein ist.

10. Dokumentenerkennungsverfahren nach einem der Ansprüche 8 oder 9,
• **dadurch gekennzeichnet,**
- **dass** es eine Erhaltungsphase enthält, in der mindestens eine definierte Position mindestens eines Feldes des genannten Dokumentes erhalten wird, und zwar eines Feldes, in dem eine zu erfassende Information steht,
- **dass** während der Phase des Suchens nach mindestens einem Hinweisobjekt festgestellt wird, ob mindestens eine definierte Position durch mindestens ein solches Feld eingenommen wird, und
- **dass** während der Feldzuordnungsphase den Daten in einem Feld, das eine solche definierte Position einnimmt, ein für die genannte definierte Position repräsentativer Identifikator zugeordnet wird.

11. Dokumentenerkennungsverfahren nach einem der Ansprüche 8 bis 10,
• **dadurch gekennzeichnet,**
- **dass** es eine Erhaltungsphase enthält, in der mindestens ein graphisches Merkmal mindestens eines Feldes des genannten Dokumentes erhalten wird, und zwar eines Feldes, in dem eine zu erfassende Information steht,
- **dass** während der Phase des Suchens nach mindestens einem Hinweisobjekt festgestellt wird, ob mindestens ein Feld des genannten Dokumentes ein solches graphisches Merkmal aufweist, und
- **dass** während der Feldzuordnungsphase jedem Feld, das ein solches graphisches Merkmal aufweist, ein für das genannte graphische Merkmal repräsentativer Identifikator zugeordnet wird.

12. Dokumentenerkennungsverfahren nach einem der Ansprüche 8 bis 11,
• **dadurch gekennzeichnet,**
- **dass** es eine Erhaltungsphase enthält, in der mindestens eine Bezeichnung mindestens eines Feldes des genannten Dokumentes erhalten wird, und zwar eines Feldes, in dem eine zu erfassende Information steht,
- **dass** während der Phase des Suchens nach mindestens einem Hinweisobjekt mindestens eine solche Bezeichnung gelesen wird und
- **dass** während der Feldzuordnungsphase jedem Feld, das eine solche Bezeichnung aufweist, ein für die genannte Bezeichnung repräsentativer Identifikator zugeordnet wird.

13. Dokumentenerkennungsverfahren nach einem der Ansprüche 8 bis 12,
• **dadurch gekennzeichnet,**
- **dass** es eine Erhaltungsphase enthält, in der mindestens ein definierter Informationsinhalt mindestens eines Feldes des genannten Dokumentes erhalten wird, und zwar eines Feldes, in dem eine zu erfassende Information steht,
- **dass** während der Phase des Suchens nach mindestens einem Hinweisobjekt der Inhalt mindestens eines Feldes des genannten Dokumentes gelesen wird und
- **dass** während der Feldzuordnungsphase jedem Feld, das den genannten definierten Informationsinhalt aufweist, ein für den genannten Inhalt repräsentativer Identifikator zugeordnet wird.

14. Dokumentenerkennungsverfahren nach einem der Ansprüche 8 bis 13,
• **dadurch gekennzeichnet,**
- **dass** es eine Erhaltungsphase enthält, in der mindestens eine definierte Beziehung zwischen den jeweiligen Informationsinhalten mindestens einer Anzahl von Feldern des genannten Dokumentes erhalten wird, und zwar eines Feldes, in dem eine zu erfassende Information steht,
- **dass** während der Phase des Suchens nach mindestens einem Hinweisobjekt der Inhalt mindestens einer Anzahl von Feldern des genannten Dokumentes gelesen wird und
- **dass** während der Feldzuordnungsphase jeder Anzahl von Feldern, die die genannte definierte Beziehung zwischen den jeweiligen Informationsinhalten erfüllt, eine für die genannte Beziehung repräsentative Anzahl von Identifikatoren zugeordnet wird.

## Claims

1. Automatic reading device (120) for a document equipped with an image capture device (100) which captures (210) an image of the document, the device comprising:
- a means (124, 132) of reading (210) in the captured image of the aforementioned document a piece of information that is representative of the image;
- a means (134) of detecting (220, 320, 420, 520, 620) at least one reading guide for the aforementioned document in function of the aforementioned representative piece of information,
i) each reading guide being associated to visual characteristics of and/or the semantic content of at least one field (700-707) of the aforementioned document,
ii) each reading guide determining a logical structure of the aforementioned document, that logical structure being independent of the localization of the fields. of the aforementioned document;
- a means (124, 126, 128) of segmenting the image of the aforementioned document into fields, in function of the aforementioned reading guide and the aforementioned logical structure;
- a means (124, 126, 128) of associating the fields in the aforementioned document to identifiers whose signification is deduced from read information dependent on the aforementioned reading guide and the aforementioned logical structure;
- a means (132) of extracting data from the aforementioned fields of the aforementioned document;
- a means (136) of associating (230, 330, 430, 530, 630) the extracted data to the identifiers whose signification is deduced from read data associated to the fields; and
- a means (110, 130) of transmitting (240, 340, 440) the extracted data and the identifiers whose signification is deduced from read data associated to the aforementioned data.

2. Reading device in accordance with claim 1, in which each reading guide determines the document family to which the aforementioned document belongs, among a plurality of document families, each document family having a logical structure that is common to all the documents in that family.

3. Reading device in accordance with either of claims 1 or 2, **characterized by** the following:
- it includes a means of saving (126, 128) at least one positioning constraint for at least one field of the aforementioned document, a field in which a piece of information might be read,
- the means of detection for at least one reading guide is adapted for detecting the compliance with at least one positioning constraint of at least one of the aforementioned fields, and
- the means of association for the fields is adapted for associating to the data read in a field which complies with one of the aforementioned constraints, an identifier which is representative of that constraint.

4. Reading device in accordance with any of claims 1 to 3, **characterized by** the following:
- it includes a means of saving (126, 128) at least one graphic characteristic of at least one field of the aforementioned document, a field in which a piece of information might be read,
- the means of detection for at least one reading guide is adapted for detecting at least one field of the aforementioned document that has one of the aforementioned graphic characteristics, and
- the means of association for the fields is adapted for associating to each field that has one of the aforementioned graphic characteristics, an identifier which is representative of that graphic characteristic.

5. Reading device in accordance with any of claims 1 to 4, **characterized by** the following:
- it includes a means of saving (126, 128) at least one heading from at least one field of the aforementioned document, a field in which a piece of information might be read,
- the means of detection for at least one reading guide is adapted for reading at least one of the aforementioned headings, and
- the means of association of the fields is adapted for associating to each field that contains the aforementioned heading, an identifier that is representative of the aforementioned heading.

6. Reading device in accordance with any of claims 1 to 5, **characterized by** the following:
- it includes a means of saving (126, 128) at least one information content constraint for at least one field of the aforementioned document, a field in which a piece of information might be read,
- the means of detection for at least one reading guide is adapted for reading the content of at least one field of the aforementioned document, and
- the means of association for the fields is adapted for associating to each field that complies with the aforementioned content constraint, an identifier that is representative of that content.

7. Reading device in accordance with any of claims 1 to 6, **characterized by** the following:
- it includes a means of saving (126, 128) at least one relation constraint between the respective information contents of at least one plurality of fields of the aforementioned document, fields in which information might be read,
- the means of detection for at least one reading guide is adapted for reading the content of at least one plurality of fields of the aforementioned document, and
- the means of association for the fields is adapted for associating to each plurality of fields that complies with the aforementioned relation constraint between the respective information contents, a plurality of identifiers that are representative of that relation.

8. Automatic reading process for a document comprising a capture step for an image of the document (210), including:
- a reading step (806) in the captured image of the aforementioned document of a piece of information that is representative of the image;
- a detection step (220, 320, 420, 520, 620, 808) for at least one reading guide of the aforementioned document in function of the aforementioned representative information,
i) each reading guide being associated to the visual characteristics and/or semantic content of at least one field (700-707) of the aforementioned document,
ii) each reading guide determining a logical structure of the aforementioned document, that logical structure being independent of the localization of the fields of the aforementioned document;
- a segmentation step of the image of the aforementioned document into fields, in function of the aforementioned reading guide and the aforementioned logical structure;
- an association step of the fields in the aforementioned document to identifiers whose signification is deduced from read information dependent on the aforementioned reading guide and the aforementioned logical structure;
- an extraction step (812) of the data from the aforementioned fields of the aforementioned document;
- an association step (816) of the extracted data to the identifiers whose signification is deduced from read information associated to the fields; and
- a transmission step (818) of the extracted data and the identifiers whose signification is deduced from read information associated to the aforementioned data.

9. Reading process in accordance with claim 8, in which each reading guide determines the document family to which the aforementioned document belongs, among a plurality of document families, each document family having a logical structure that is common to all the documents in that family.

10. Reading process in accordance with either of claims 8 or 9, **characterized by** the following:
- it includes a saving step of at least one positioning constraint for at least one field of the aforementioned document, a field in which a piece of information might be read,
- during the detection step of at least one reading guide, the compliance with at least one positioning constraint of at least one of the aforementioned fields is detected, and
- during the association step of the fields, to the data read in a field which complies with one of the aforementioned constraints, is associated an identifier which is representative of that constraint.

11. Reading process in accordance with any of claims 8 to 10, **characterized by** the following:
- it includes a saving step of at least one graphic characteristic of at least one field of the aforementioned document, a field in which a piece of information might be read,
- during the detection step of at least one reading guide, at least one field of the aforementioned document that has one of the aforementioned graphic characteristics is detected, and
- during the association step of the fields, to each field that has one of the aforementioned graphic characteristics, is associated an identifier which is representative of that graphic characteristic.

12. Reading process in accordance with any of claims 8 to 11, **characterized by** the following:
- it includes a saving step of at least one heading from at least one field of the aforementioned document, a field in which a piece of information might be read,
- during the detection step of at least one reading guide, at least one of the aforementioned headings is read, and
- during the association step of the fields, to each field that contains one of the aforementioned headings, is associated an identifier which is representative of that heading.

13. Reading process in accordance with any of claims 8 to 12, **characterized by** the following:
- it includes a saving step of at least one information content constraint for at least one field of the aforementioned document, a field in which a piece of information might be read,
- during the detection step of at least one reading guide, the content of at least one field of the aforementioned document is read, and
- during the association step of the fields, to each field that complies with the aforementioned content constraint, is associated an identifier that is representative of that content.

14. Reading process in accordance with any of claims 8 to 13, **characterized by** the following:
- it includes a saving step of at least one relation constraint between the respective information contents of at least one plurality of fields of the aforementioned document, fields in which information might be read,
- during the detection step of at least one reading guide, the content of at least one plurality of fields of the aforementioned document is read, and
- during the association step of the fields, to each plurality of fields that complies with the aforementioned relation constraint between the respective information contents is associated a plurality of identifiers that are representative of that relation.
